# FASCICULE DE BREVET EUROPEEN

(11) **EP 4 496 946 B1**
(45) Date de publication et mention de la délivrance du brevet: **25.02.2026**
(21) Numéro de dépôt: 23712529.9
(22) Date de dépôt: 21.03.2023
(51) Int. Cl.: F16B 7/04, B62K 19/24, B62K 19/32, B62K 19/12

(54) **TUBE DÉMONTABLE DE CADRE DE BICYCLETTE, COMPORTANT UNE BAGUE DE FIXATION AMOVIBLE À UN RACCORD, ET CADRE ADAPTABLE DE BICYCLETTE COMPORTANT UN TEL TUBE DÉMONTABLE**
ABNEHMBARES ROHR FÜR EINEN FAHRRADRAHMEN MIT EINEM ABNEHMBAREN RING ZUR BEFESTIGUNG AN EINEM VERBINDER UND ANPASSBARER FAHRRADRAHMEN MIT SOLCH EINEM ABNEHMBAREN ROHR
REMOVABLE TUBE FOR A BICYCLE FRAME, COMPRISING A REMOVABLE RING FOR ATTACHMENT TO A CONNECTOR, AND ADAPTABLE BICYCLE FRAME COMPRISING SUCH A REMOVABLE TUBE

(30) Priorité: 21.03.2022 FR 2202476; 30.08.2022 FR 2208684
(43) Date de publication de la demande: 29.01.2025
(73) Titulaire: REF SAS, 69005 Lyon (FR)
(72) Inventeur: SEGURA, Romain, 69088 Lyon (FR); SEGURA, Alain, 34470 Perols (FR); CARNEIRO, David, 69510 Thurins (FR)
(74) Mandataire: Rhein, Alain
(86) Numéro de dépôt international: PCT/EP2023/057121
(87) Numéro de publication internationale: WO 2023/180268

(56) Documents cités:
- BE-A- 488 707
- CN-U- 204 548 361
- CN-U- 214 397 073
- FR-A- 388 908
- JP-U- S4 995 644

## Description

La présente invention s'inscrit dans le domaine technique de la conception mécanique et de l'assemblage des cadres de bicyclettes et de deux-roues, ainsi que de leur désassemblage.

L'invention se rapporte plus particulièrement à un tube démontable de cadre de bicyclette, pouvant être assemblé ou désassemblé par rapport à un raccord présent sur le cadre. Le tube démontable de l'invention est par exemple un tube horizontal, ou un tube diagonal, ou encore un tube de selle. L'invention concerne encore des bases démontables pour cadre de bicyclette.

De manière connue dans l'état de la technique, la liaison et la cohésion mécanique entre certains éléments constitutifs d'une bicyclette (notamment le pédalier, les roues, la fourche et la selle) est assurée par un cadre. Un cadre de bicyclette comporte un triangle avant et un triangle arrière, formés généralement par des tubes rectilignes.

La majorité des modèles de bicyclette présentent un cadre dont les tubes sont liés entre eux de façon inamovible, généralement par soudure ou par brasage. Les tubes de cadre peuvent être en matériau métallique tel qu'un alliage d'acier, de titane, d'aluminium, etc. Des manchons cylindriques peuvent renforcer les zones de liaison entre les tubes.

Ces techniques standard de fixation de tubes de cadre permettent d'obtenir un cadre de bicyclette de résistance et de tenue mécanique satisfaisantes.

Toutefois, la forme des triangles d'un tel cadre n'est pas adaptable, puisque les positions relatives des tubes ne sont pas modifiables. Il n'est pas possible d'ajuster les dimensions et l'architecture du cadre à différentes utilisations (standard, « cargo », « fatbike », vélo à assistance électrique, etc.) ou à l'évolution des besoins de l'utilisateur, ni de passer d'un cadre fermé à un cadre ouvert par exemple.

En outre, pour répondre aux enjeux de plus en plus cruciaux de développement durable et de consommation raisonnée des matériaux, il est souhaitable de rallonger le cycle de vie du cadre de bicyclette en encourageant la réparation et la réutilisation de ses composants.

Or, les cadres classiques ne répondent pas suffisamment à ces enjeux. Non seulement la réparation d'un composant isolé du cadre n'est pas aisée, mais en outre, le désassemblage du cadre et le reconditionnement des pièces détachées du cadre peuvent être délicats.

Des cadres de bicyclette présentant des triangles avant et/ou arrière partiellement ou totalement démontables ont été proposés dans l'état de la technique. Le montage des tubes de ces cadres fonctionne par exemple par insertion d'un tube dans un raccord puis pincement à l'aide d'attaches rapides, ou encore par insertion d'un tube dans un raccord puis ajustement par vissage depuis l'intérieur ou depuis l'extérieur du raccord.

Par exemple, le document publié sous le numéro IT 1 045 954 B décrit une structure démontable de bicyclette ou motocyclette comprenant des éléments tubulaires unitaires. Une extrémité de chaque tube unitaire est dotée de filetages internes aussi bien qu'externes. Les filets externes du tube se fixent à l'intérieur d'un raccord évidé, tandis que les filets internes du tube reçoivent un outil de serrage tubulaire coaxial avec le tube et avec le raccord évidé.

Ce document de brevet met en avant la résistance mécanique améliorée de la jonction entre le tube amovible et son raccord de tube. Toutefois, le vissage et le dévissage des trois éléments mécaniques distincts susmentionnés sont assez complexes.

Le document publié sous le numéro FR 55429 E décrit quant à lui un cadre de bicyclette assemblé sans soudure, à l'aide de tubes amovibles présentant une extrémité où se loge une deuxième tubulure en forme de cône, de forme complémentaire avec des manchons présentant un évidement de forme également conique, à filetage intérieur. La fixation d'un tube et d'un raccord est notamment réalisée par boulonnage à l'intérieur du manchon.

On peut également noter la publication de brevet portant le numéro FR 867 816 A*,* se rapportant à un cadre de bicyclette assemblé sans soudure dont les composants mécaniques (tiges filetées et manchons) sont assemblés entre eux par un emboîtement serré, et par l'utilisation d'un outil de fixation supplémentaire qui comporte un manchon tronconique et une tige filetée aux deux extrémités.

Les cadres de vélo décrits dans les documents cités ci-avant présentent l'intérêt d'être assemblables sans soudure ni brasure.

Toutefois, la cohésion et la tenue mécanique de ces cadres de bicyclette démontables connus peuvent dans certains cas être insuffisantes. On déplore en outre que l'assemblage et le désassemblage de ces cadres de bicyclette reste complexe, notamment pour ce qui concerne les procédés décrits dans les documents cités ci-avant, qui nécessitent soit un boulonnage, soit un emboîtement serré, soit un vissage coaxial d'au moins trois composants mécaniques distincts.

Le document BE 488707 A décrit par ailleurs une pièce tubulaire en alliage léger telle que potence de guidon et raccord de cadre pour cycles formée de deux parties semi-tubulaires accolées et assemblées par emboitement et bagues de serrage.

Les problématiques mentionnées ci-avant ne sont pas résolues de manière satisfaisante par les structures de bicyclette de l'état de la technique.

Il existe ainsi actuellement un besoin pour un tube de cadre démontable permettant de former un cadre de bicyclette adaptable, facile à assembler et à désassembler par l'utilisateur du vélo, dont l'assemblage soit rapide et puisse de préférence être réalisé en une durée inférieure à vingt minutes, voire inférieure à dix minutes. Le désassemblage du cadre de vélo recherché doit également être aisé et à la portée de l'utilisateur final du vélo. Notamment, le procédé d'assemblage et de désassemblage ne doit pas requérir de soudure ou de brasure.

On souhaite en particulier pouvoir adapter un cadre de bicyclette afin d'autoriser diverses utilisations : vélo standard, vélo « cargo », vélo « fatbike », et on souhaite également passer de manière simple d'un mode sans assistance électrique à un mode avec assistance électrique par connexion ou déconnexion d'une batterie électrique au cadre.

On souhaite en outre pouvoir réparer ou remplacer aisément les composants du cadre.

Le cadre adaptable de bicyclette recherché doit par ailleurs conserver une excellente tenue mécanique et une bonne durabilité, dans tous ses modes d'utilisation.

Il existe un besoin additionnel pour un cadre démontable et adaptable de bicyclette qui soit fabriqué dans des matériaux fiables et éco-conçus, dont l'empreinte carbone soit modérée, tout en demeurant de fabrication aisée et de coût modéré.

Pour répondre à ces besoins, la Demanderesse a conçu et mis en œuvre un tube démontable de cadre pouvant être relié de façon amovible à un raccord de cadre de bicyclette. Un serrage adaptatif coaxial peut être mis en œuvre entre le tube démontable et le raccord de cadre. Le serrage coaxial est facile, rapide et réversible.

Ainsi, l'invention comporte un tube démontable pour cadre de bicyclette, ledit tube s'étendant longitudinalement le long d'un axe et comprenant une paroi externe, ledit tube comprenant au moins une bague de fixation qui comprend une surface radiale interne de bague s'étendant en anneau autour de la paroi externe selon l'axe, et définissant un espace radial ouvert vers l'extérieur entre la paroi externe de tube et la surface radiale interne de bague ;
- ledit espace radial étant prévu pour recevoir un raccord de cadre ;
- ladite bague de fixation comprenant en outre des moyens de fixation internes au niveau de la surface radiale interne, configurés pour se fixer de manière amovible sur des moyens de fixation externes du raccord.

Grâce à la bague de fixation incluse dans le tube démontable selon l'invention, il est aisé d'assembler solidement le tube à un raccord de cadre puis de le désassembler ultérieurement, par serrage coaxial de la bague de fixation avec le raccord.

Un tube démontable conforme à l'invention peut présenter en outre les caractéristiques optionnelles et non limitatives suivantes, prises seules ou selon l'une quelconque des combinaisons techniquement possibles :
- les moyens de fixation internes de la bague de fixation comprennent des filetages internes complémentaires avec des filetages externes du raccord.
- la bague de fixation comprend une extrémité de raccordement prévue pour être orientée vers le raccord.
- la bague de fixation comprend en outre une base de bague située axialement à l'opposé de ladite extrémité de raccordement, les moyens de fixation internes étant positionnés du côté de l'extrémité de raccordement.
- le tube comprend en outre une cale de serrage, la base de bague comprenant une butée d'appui permettant d'appuyer sur ladite cale de serrage et d'intercaler ladite cale de serrage entre le tube et la bague de fixation.
- la base de bague comprend au moins une gorge de démontage configurée pour permettre un démontage de la cale de serrage, de préférence à l'aide d'un outil extracteur.
- la bague de fixation est mobile en translation par rapport au tube le long de l'axe longitudinal du tube, et est de préférence retirable du tube.

L'invention concerne un cadre adaptable de bicyclette selon la revendication 1.

Un cadre adaptable de bicyclette conforme à l'invention peut présenter en outre les caractéristiques optionnelles et non limitatives suivantes, prises seules ou selon l'une quelconque des combinaisons techniquement possibles :
- les moyens de fixation externes du raccord comprennent des filetages externes.
- l'évidement central du raccord comprend une surface interne tronconique, configurée pour permettre d'intercaler une cale de serrage contre ladite surface interne tronconique entre le tube démontable et le raccord.
- la bague de fixation est à l'état désassemblé par rapport au tube démontable, le tube démontable étant alors dépourvu de bague de fixation.
- le cadre comprend un tube de selle tel que défini ci-avant selon le premier aspect et/ou un tube horizontal tel que défini ci-avant selon le premier aspect, le raccord de cadre étant un raccord de selle prévu pour assembler de façon amovible ledit tube de selle avec ledit tube horizontal.
- le cadre comprend une fourche, un tube horizontal tel que défini ci-avant selon le premier aspect et/ou un tube diagonal tel que défini ci-avant selon le premier aspect, le raccord de cadre étant un raccord de direction prévu pour assembler de façon amovible la fourche avec au moins un parmi le tube horizontal et/ou le tube diagonal.
- le cadre comprend deux bases, un tube de selle tel que défini ci-avant selon le premier aspect et/ou un tube diagonal tel que défini ci-avant selon le premier aspect, le raccord de cadre étant un raccord de base prévu pour assembler de façon amovible les bases avec au moins un parmi le tube de selle et/ou le tube diagonal.
- au moins une base du cadre parmi les deux dites bases comprend un flanc latéral qui comporte au moins une vis de fixation sur l'autre base située en regard, de préférence trois vis de fixation sur ladite autre base.
- au moins une base du cadre parmi les deux dites bases comprend une vis supplémentaire de fixation au raccord de base.

L'invention vise, selon un troisième aspect, un cadre adaptable de bicyclette comprenant un raccord de base sur lequel sont rapportées de façon amovible deux bases.

Au moins lesdites bases comportent un flanc latéral qui comporte des moyens de passe d'au moins une vis de fixation et de serrage sur le raccord de base.

L'invention vise, également, une bicyclette comportant un cadre adaptable de bicyclette tel que défini dans cette revendication 1.

D'autres particularités et avantages apparaitront dans la description détaillée, qui suit, d'un exemple de réalisation, non limitatif, de l'invention illustré par les figures 1 à 10 annexées et dans lesquelles :
[Fig.1] représente un cadre de bicyclette selon un mode de réalisation de l'invention, ledit cadre étant vu de côté dans un état assemblé;
[Fig.2] est une vue rapprochée en coupe de la zone de jonction entre un tube horizontal et un tube de selle du cadre de bicyclette de la Figure 1, à l'état assemblé, sur laquelle on a notamment illustré une bague de fixation, une cale de serrage et un raccord de tube de selle selon un exemple ;
[Fig. 3] est une vue éclatée en perspective de plusieurs éléments d'un cadre de bicyclette selon un mode de réalisation de l'invention, au niveau de la jonction entre un tube horizontal et un tube de selle;
[Fig.4] est une vue en perspective des éléments de la Figure 3 dans un état assemblé, à l'exception d'une cale de serrage représentée en éclaté à des fins d'illustration;
[Fig.5] est une vue rapprochée en coupe de la jonction du tube diagonal et du tube horizontal du cadre de bicyclette de la Figure 1, sur laquelle un raccord de direction est visible ;
[Fig.6] est une vue rapprochée en coupe de la jonction du tube de selle et du tube diagonal du cadre de bicyclette de la Figure 1, sur laquelle le raccord de base est visible ;
[Fig.7] est une vue latérale partielle des bases du cadre, au voisinage du raccord de base, du côté d'un premier flanc latéral ;
[Fig.8] est une vue latérale partielle desdites bases du côté d'un deuxième flanc latéral ;
[Fig.9] est une vue similaire à la figure 7 correspondant à un second mode de réalisation ;
[Fig.10] est une vue partielle de la figure 9, l'une des bases ayant été retirée.

On décrit ci-après un cadre modulaire et adaptatif d'un véhicule deux-roues, tel qu'une bicyclette, comportant des tubes démontables reliés de façon amovible via des raccords. Un serrage adaptatif coaxial peut être mis en œuvre entre au moins un tube et un raccord, au niveau d'au moins une extrémité de tube, de façon aisée et réversible.

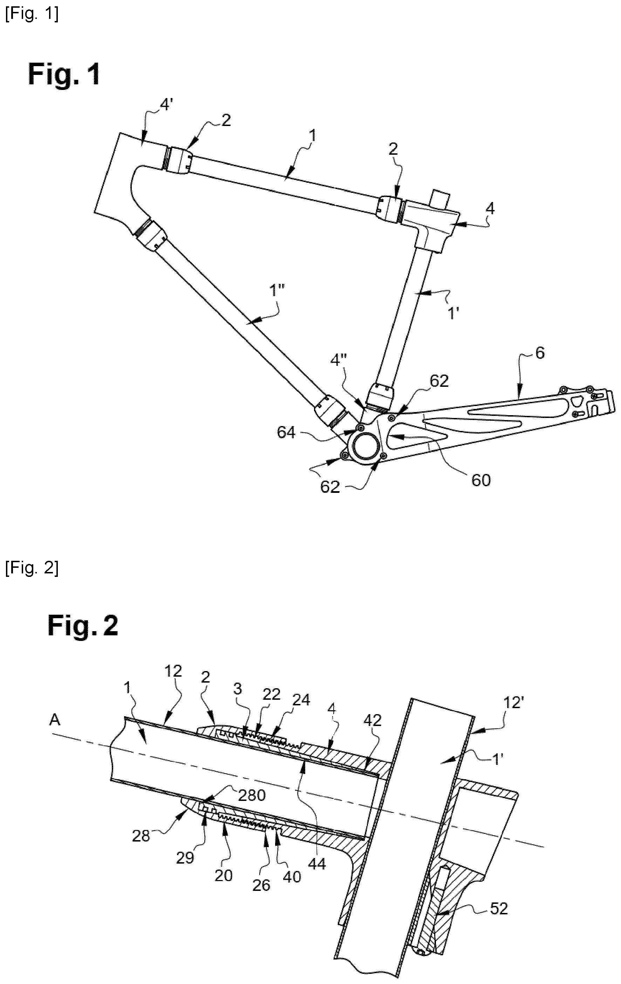

A ce titre, en référence à la **Figure 1****,** un cadre adaptable de bicyclette selon un exemple de réalisation comporte un tube horizontal 1 démontable, un tube de selle 1' démontable et un tube diagonal 1" démontable. Le tube horizontal, le tube de selle et le tube diagonal forment un triangle avant. Le cadre comporte également une partie inférieure 6 formée de préférence par une paire de bases 60 démontables.

Le tube horizontal 1 et le tube de selle 1' sont assemblés ensemble de façon amovible sur un raccord de selle 4. Le tube horizontal 1 et le tube diagonal 1" sont assemblés ensemble de façon amovible sur un raccord de direction 4'. Enfin, le tube de selle 1' et le tube diagonal 1" sont assemblés ensemble de façon amovible sur un raccord de base 4".

On décrit ci-après, en référence à la **Figure 2****,** le raccordement entre d'une part le tube horizontal 1 et sa bague de fixation 2, et d'autre part le raccord de selle 4. Les caractéristiques du raccordement entre le tube 1, la bague 2, la cale 3 et le raccord 4 sont transposables à la bague de fixation de l'extrémité gauche du tube horizontal 1. Les caractéristiques du raccordement sont également transposables à la bague de fixation de l'extrémité basse du tube de selle 1', et aux bagues de fixation des deux extrémités du tube diagonal 1", comme il sera vu ci-après.

Le tube 1 est de préférence de forme générale cylindrique, ici creuse. Le tube 1 s'étend le long d'un axe longitudinal A. L'extérieur du tube 1 est délimité par une paroi externe 12. Le tubes 1 est de préférence formé dans un matériau métallique, tel qu'un alliage d'aluminium, et/ou d'acier, et/ou de titane, etc.

La bague 2 de fixation est complémentaire avec le raccord 4 et permet un raccordement amovible du tube 1 sur le raccord 4. Cette bague 2, qui est de préférence complètement amovible par rapport au tube 1, peut être rapportée autour de la paroi 12.

La bague 2 s'étend radialement en anneau autour de la paroi 12 du tube 1. En outre, la bague 2 s'étend axialement depuis une base de bague 28 (du côté le plus éloigné du raccord 4) jusqu'à une extrémité de raccordement 26 (du côté le plus proche du raccord 4).

Du côté radialement interne, la base de bague 28 peut se plaquer directement contre la paroi 12 du tube. Une fois le tube 1 inséré dans la bague 2, un espace radial 22 est ménagé entre la paroi 12 et la surface radiale interne 24 de la bague 2, du côté de l'extrémité 26.

L'espace radial 22 ainsi défini entre le tube 1 et la bague 2 est ouvert vers l'extérieur, du côté du raccord 4. L'espace radial 22 est prévu pour recevoir de manière amovible une extrémité du raccord 4 comprenant des moyens de fixation externes (ici des filetages externes 40) complémentaires avec les moyens de fixation internes de la bague 2. Ainsi, le raccord constitue un embout « mâle » et la bague constitue un embout « femelle ».

A l'aide desdits deux embouts, la bague 2 peut se visser de façon amovible sur le raccord 4, par serrage coaxial.

Du côté intérieur, la bague 2 présente également des moyens de fixation internes 20 de préférence positionnés sur la surface radiale interne 24, aptes à coopérer mécaniquement avec les moyens de fixation externes du raccord 4.

Dans le présent exemple, les moyens de fixation internes de la bague 2 sont formés par des filetages internes 20. Les filetages internes 20 présentent ici un même pas de vis que les filetages externes 40 du raccord 4. Toutefois, d'autres moyens de fixation mécanique amovible pourraient être envisagés en remplacement ou en combinaison des filetages internes 20.

Le raccord de selle 4 présente par exemple une forme générale coudée ou en T. Un premier évidement vertical est ici formé dans le raccord 4 pour le passage traversant du tube de selle 1'. Afin de fixer en position le tube de selle 1' dans le raccord 4, l'extrémité haute du tube 1' présente dans cet exemple une pièce de vissage 50. La pièce de vissage 50 peut s'insérer dans une partie basse du raccord 4. La pièce de vissage 50 présente un orifice pour le passage d'une vis de fixation 52. Lorsque la pièce de vissage 50 vient buter contre le raccord 4, la vis de fixation 52 peut s'insérer à travers la pièce de vissage 50 et dans le raccord 4.

Un deuxième évidement horizontal est ici formé dans le raccord 4 pour l'insertion d'une extrémité droite du tube horizontal 1. Ce deuxième évidement 42 débouche de façon préférentielle sur un alésage qui permet l'insertion d'au moins un câble électrique.

Sur une extrémité gauche, le raccord 4 présente une surface distale sensiblement cylindrique s'étendant autour de l'évidement horizontal 42. Cette surface distale comprend les moyens de fixation externes (ici les filetages externes 40). Vers la droite à partir de cette surface distale, le raccord 4 présente dans cet exemple une augmentation de diamètre jusqu'à une surface centrale du raccord 4. De préférence, cette partie centrale du raccord 4 présente un même diamètre extérieur que l'extrémité de raccordement 26 de la bague 2. Ainsi, la partie centrale du raccord est prévue pour s'étendre dans la continuité de l'extrémité de raccordement 26 de la bague.

De manière avantageuse et préférentielle, le tube 1 et la bague 2 sont associés à une cale de serrage 3 conçue spécifiquement pour maintenir le tube 1 en position dans le raccord 4.

La cale de serrage 3 est alors configurée pour être insérée :
- d'une part dans l'espace radial 22, entre la bague 2 et la paroi 12 du tube 1, autour de la paroi 12,
- et d'autre part dans l'évidement horizontal 42, entre le raccord 4 et ladite paroi 12.

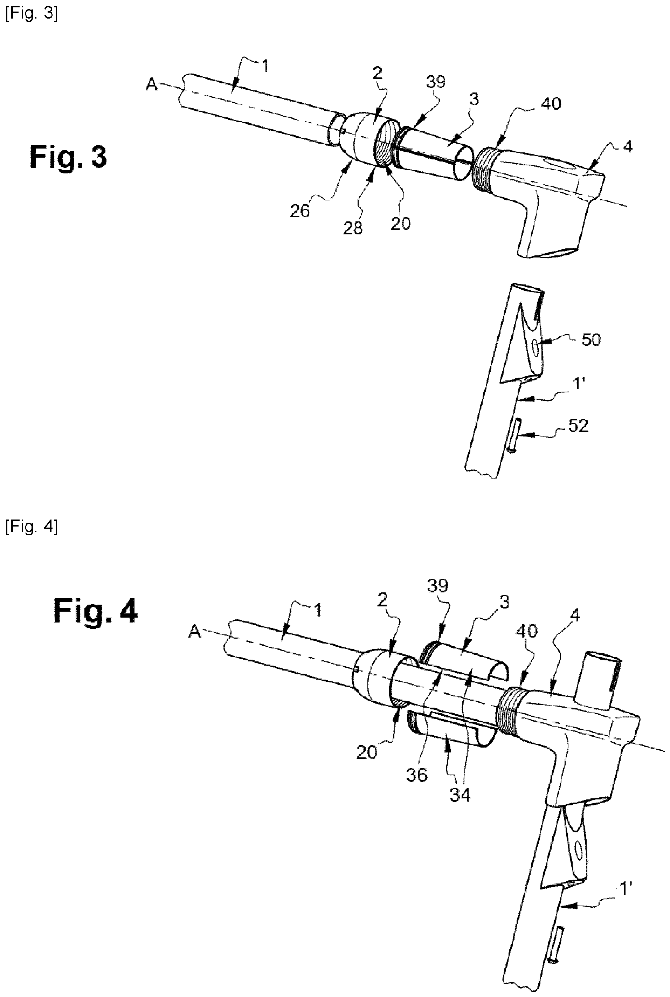

La cale de serrage 3 est illustrée en perspective sur les vues éclatées des **Figures 3 et 4** annexées. Comme représenté sur ces figures, dans le présent exemple, la cale de serrage présente une forme tronconique creuse. Selon l'orientation des Figures 1 à 4, la base de ce tronc de cône est située du côté gauche (appui sur la bague 2) et le sommet de ce tronc de cône est situé du côté droit (appui sur le raccord 4).

Ici, la cale 3 est constituée de deux demi-coques 34 jointes au niveau de deux arêtes de jonction 36 rectilignes.

En complémentarité avec la cale de serrage 3, l'évidement central 42 du raccord 4 comprend avantageusement une surface interne tronconique 44 de même pente que la surface externe de la cale 3. La surface interne tronconique 44 est configurée pour que la cale de serrage 3 y soit appuyée et maintenue. Les moyens de fixation externes (ici les filetages externes 40) s'étendent alors radialement autour de la surface interne tronconique 44.

De préférence, la bague 2 est configurée pour venir presser la cale de serrage 3 en direction du raccord 4, simultanément au vissage de la bague 2 sur le raccord 4.

Pour ce faire, la base 28 de la bague 2 comprend de préférence une butée 280 permettant d'appuyer sur la base de la cale de serrage 3. La butée 280 délimite axialement du côté gauche l'espace radial 22 dans lequel la cale est insérée. Ici, la butée 280 fait un angle droit avec la paroi 12 du tube 1, et vient donc appuyer sur la cale 3 pendant que la bague 2 est vissée.

De préférence, la bague 2 comporte en outre des moyens de démontage de la cale 3. Ici, la cale de serrage 3 présente une pluralité de rainures annulaires 39 (ici au moins deux rainures). Les moyens de démontage, ici les rainures annulaires 39 de la cale 3, permettent l'insertion d'un outil, par exemple d'un extracteur, et permettent ainsi le démontage de la cale de serrage 3 au cours d'un désassemblage du tube 1 et du raccord 4.

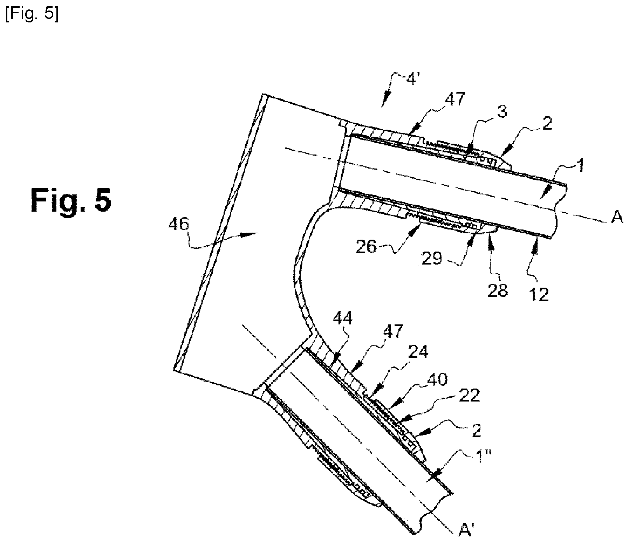

En référence à la **Figure 5****,** le raccord de direction 4' du cadre adaptable de bicyclette permet le raccordement du tube horizontal 1 et du tube diagonal 1". Sur une extrémité gauche, le tube horizontal 1 comprend une bague de fixation 2 de préférence similaire à la description ci-avant. Le tube diagonal 1" comprend, sur son extrémité gauche, une bague de fixation similaire.

Le raccord de direction 4' présente ici une forme générale en V. Le raccord de direction 4' comporte une branche centrale 46 ainsi que deux portions évidées 47 latérales s'étendant de part et d'autre de la branche centrale 46.

Comme il a été vu ci-avant concernant l'évidement horizontal 42, chacune des portions évidées 47 peut recevoir de manière amovible une extrémité d'un tube démontable, ici respectivement une extrémité du tube horizontal 1 et une extrémité du tube diagonal 1".

Une première portion évidée 47 est prévue pour recevoir l'extrémité du tube horizontal 1 s'étendant le long de l'axe longitudinal A. Une deuxième portion évidée 47 est prévue pour recevoir l'extrémité du tube diagonal 1" s'étendant le long d'un axe longitudinal A'. Un angle géométrique entre l'axe longitudinal A et l'axe longitudinal A' est de préférence compris entre 15 degrés et 45 degrés, et est par exemple ici de 30 degrés.

Chacune des portions évidées 47 présente une surface distale sensiblement cylindrique, s'étendant autour de l'évidement prévu pour recevoir une extrémité de tube. Lesdites surfaces distales comprennent des moyens de fixation externes respectifs (ici des filetages externes 40). Vers la gauche à partir de ces surfaces distales, les portions évidées 47 présentent ici une élévation de diamètre jusqu'à se rejoindre au niveau de la branche centrale 46.

La fixation amovible d'une bague de fixation 2 sur le raccord 4' par serrage coaxial, au niveau de l'une des portions évidées 47, se déroule de préférence comme décrit ci-avant.

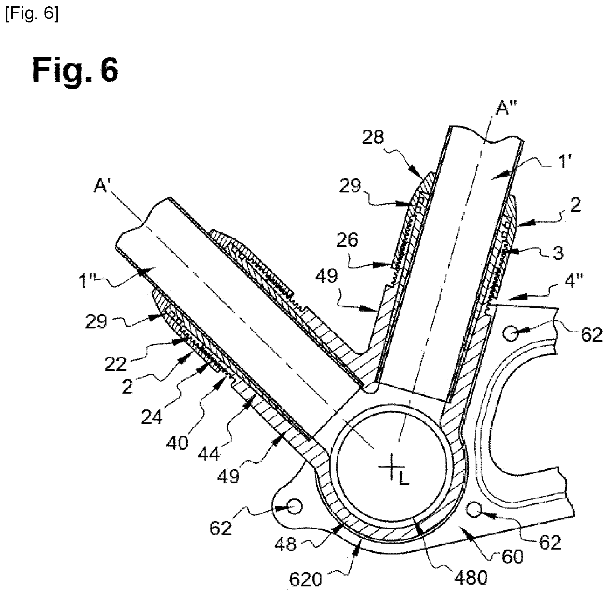

En référence à la **Figure 6****,** le raccord de base 4" du cadre adaptable de bicyclette permet le raccordement du tube de selle 1' et du tube diagonal 1". De préférence, le tube de selle 1' comprend à une extrémité basse une bague de fixation 2 de préférence similaire à la description ci-avant. Le tube diagonal 1" comprend également, sur son extrémité droite, une bague de fixation similaire.

Le raccord de base 4" comprend ici un corps cylindrique 48 central, ainsi que deux oreilles 49 avant et arrière, s'étendant vers le haut à partir d'une surface supérieure du corps cylindrique 48, formant ainsi un V.

Chacune des oreilles 49 de fixation est évidée en son centre. Comme il a été vu ci-avant concernant l'évidement horizontal 42, chacune des oreilles 49 peut ainsi recevoir de manière amovible une extrémité d'un tube démontable, ici respectivement une extrémité d'une paroi externe 12' du tube de selle 1' ou une extrémité du tube diagonal 1". Un angle géométrique entre l'axe longitudinal A' d'extension du tube diagonal et l'axe longitudinal A" du tube de selle est de préférence compris entre 45 degrés et 90 degrés, et est par exemple ici de 70 degrés.

De même que ci-avant, les oreilles 49 présentent des surfaces distales cylindriques intégrant des moyens de fixation externes (ici des filetages externes 40). Ainsi, la fixation amovible d'une bague de fixation 2 sur le raccord 4" par serrage coaxial, au niveau de l'une des oreilles 49, peut s'effectuer de façon similaire à la description ci-avant.

Le corps cylindrique 48 s'étend longitudinalement le long d'un axe L, depuis un premier bord annulaire 481 jusqu'à un deuxième bord annulaire 482. L'axe L du corps cylindrique 48 est ici orthogonal au plan des axes A, A' et A" des tubes de cadre. La surface interne 480 du corps cylindrique 48 s'étend autour de l'axe L.

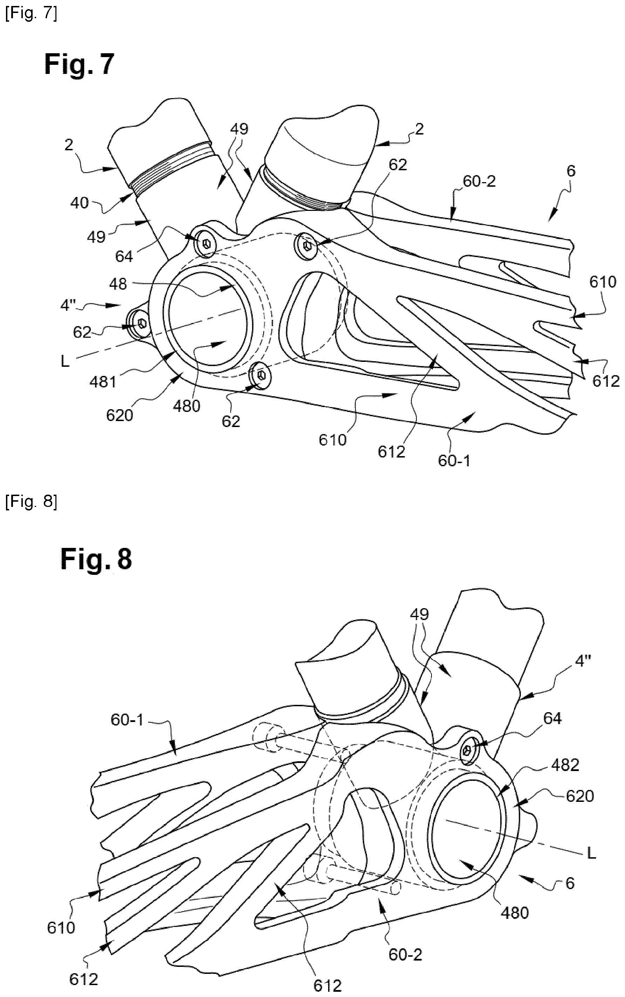

En se rapportant aux **figures 7 à 10,** l'invention se distingue en ce que sur le raccord de base 4" sont rapportées par des moyens de fixation adaptés, de part et d'autre et de manière amovible deux bases 60 modulaires démontables, formant une partie inférieure 6 du cadre de bicyclette. Dans les exemples de réalisation de l'invention, le corps cylindrique 48 de ce raccord de base 4" permet le montage et le démontage d'une première base 60-1 sur un premier flanc latéral du cadre et une deuxième base 60-2 sur un flanc latéral opposé.

Chacune des bases 60-1 et 60-2 modulaires comprend une partie avant 620 évidée respective en forme d'oreille, pouvant être rapportée latéralement d'un côté sur une des extrémités du corps cylindrique 48 et recevoir partiellement le corps cylindrique 48. Plus particulièrement, cette partie avant 620 en forme d'oreille comporte un alésage 621 de section ajustée à celui d'un bord annulaire 481 ; 482 que défini ce corps cylindrique 48 de part et d'autre du raccord de base 4". Ainsi, la première base 60-1 peut s'emboiter sur le premier bord annulaire 481 et la deuxième base 60-2 peut venir s'emboiter sur du deuxième bord annulaire 482.

En référence au mode de réalisation des **Figures 7 et 8** annexées, lorsque les deux bases 60-1 et 60-2 sont ainsi rapportées latéralement sur le corps cylindrique 48, le raccord de base 4" et ses deux oreilles de fixation 49 sont pris en tenaille entre les deux bases 60-1 et 60-2. **La** **Figure 7** illustre la partie inférieure 6 du cadre, vue du côté de la base 60-1. **La** **Figure 8** illustre, quant à elle, la partie inférieure 6 du cadre du côté de la base 60-2.

Les deux bases 60-1 et 60-2 peuvent être fixées de manière amovible l'une avec l'autre, à l'aide de moyens de fixation définis par au moins une vis de fixation, ici par quatre vis de fixation 62, 64.

Dans le présent exemple, la base 60-1 comprend sur sa partie avant 620 quatre ouvertures de passage de vis de fixation 62 ; 64, dont une première vis à l'avant du corps cylindrique 48, une deuxième vis à l'arrière et en partie basse du corps cylindrique 48, une troisième vis à l'arrière et en partie haute du corps cylindrique 48, sensiblement à hauteur de l'oreille arrière 49.

Dans une première variante, la base 60-2 peut comprendre sur sa partie avant 620 en forme d'oreille des trous taraudés situés en correspondance des ouvertures de passage de vis de fixation 62 ; 64 dans la base 60-1 et dans lesquels viennent se visser les visse 62 ; 64. Selon une autre variante, la base 60-2 peut comprendre sur sa partie avant 620 en forme d'oreille des ouvertures en correspondance ce celles ménagées dans la partie avant 620 en forme d'oreille de la base 60-1, ouvertures d'où peuvent émerger les vis 62 ; 64 pour coopérer avec des écrous.

On peut encore imaginer qu'au moins une des ouvertures dans la partie avant 620 en forme d'oreille de ces deux base 60-1 et 60-2 soit traversée par des vis de fixation 64 de manière apte à coopérant avec un trou taraudé ménagé au niveau du raccord de base 4".

Ainsi, les deux bases 60-1 et 60-2 peuvent être solidement montées sur le raccord de base 4", de manière réversible, en étant fixées l'une avec l'autre à l'avant.

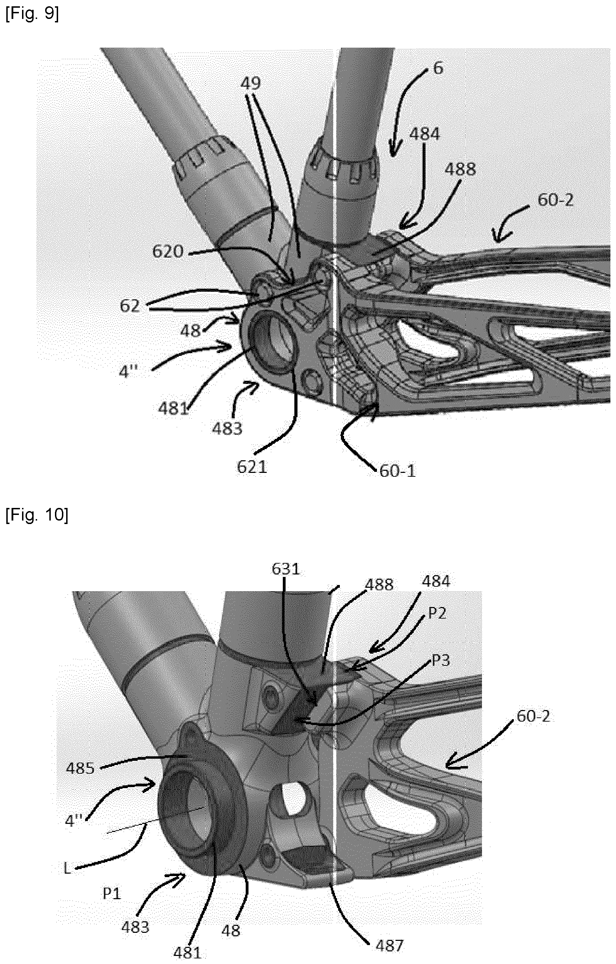

Le mode de réalisation visible dans les **figures 9 et 10** se distingue du précédent, en ce que le raccord de base 4" comporte sur ses côtés opposés 483, 484 un plan d'appui P1, P2, avantageusement perpendiculaires à l'axe L du corps cylindrique 48 et préférentiellement parallèles entre eux avec lesquels coopèrent, respectivement un plan d'appui idoine que comporte la partie avant 620 en forme d'oreille des bases 60-1 et 60-2 sur leur côté en regard du raccord de base 4".

Selon un mode d'exécution préférentiel, ces plans d'appui P1, P2, sont définis au moins par une surface d'appui annulaire 485 s'étendant aux extrémités du corps cylindrique 48, préférentiellement autour des bords annulaires 481, 482.

Avantageusement ces plans d'appui P1, P2 sont encore définis par autour des ailes d'entretoisements 487, 488, s'étendant à l'arrière dudit corps cylindrique 48 et/ou de l'oreille arrière 49.

En tant que moyens de fixation, chacune des base 60-1 ; 60-2 peut comprendre sur sa partie avant 620 en forme d'oreille des ouvertures pour le passage de vis de fixation 62 prévues pour coopérer avec des trous taraudés que comporte sur ses côtés opposés 483, 484 le raccord de base 4" au niveau des plans d'appui P1, P2. Dans une autre variante, ces ouvertures dans la partie avant 620 en forme d'oreille de ces bases 60-1 ; 60-2 peuvent également être disposé en correspondance avec des trous traversant dans le raccord de base 4", notamment au niveau des surfaces d'appui annulaires 485 et des ailes d'entretoisements 487, 488, pour le passage de vis traversantes 62 d'un côté pour coopérant avec des écrous de l'autre. Il est encore envisageable une solution combinant les deux types de moyens de fixation qui viennent d'être décrits.

Dans le cadre du mode de réalisation visible dans **les** **figures 9 et 10****,** il est encore visible un plan d'appui P3 défini par le raccord de basse 4" et s'étendant parallèlement à l'axe L du corps cylindrique 48. Avantageusement ce plan d'appui s'étendant radialement par rapport à cet axe L ne formant un angle compris entre 20° et 70°, préférentiellement entre 40° et 50°, tout particulièrement de l'ordre de 45°.

Par ailleurs, selon l'invention au moins une base, préférentiellement chacune des bases 60-1, 60-2 comporte une butée d'appui 631 coopérant avec le plan d'appui P3.

Il résulte de cette configuration une liaison entre les bases 60-1, 60-2 et le raccord de base 4" une très grande rigidité et une parfaite précision de géométrie.

Un procédé d'assemblage du tube 1 et du raccord 4 à l'aide de la bague de fixation 2, et optionnellement de la cale de serrage 3, se déroule par exemple d'après les étapes suivantes.

La bague de fixation 2 est d'abord disposée sur le tube 1, par insertion du tube 1 dans l'orifice central traversant de la bague de fixation 2.

L'extrémité du tube 1 est ensuite insérée dans l'évidement horizontal 42 du raccord 4, et la bague de fixation 2 est glissée le long du tube au voisinage du raccord 4.

Dans le cas où une cale de serrage 3 est utilisée, celle-ci est ensuite intercalée entre la paroi 12 du tube 1 et la surface interne tronconique 44 du raccord 4. La cale de serrage 3 fait alors face à la butée d'appui 280 de la base 28 de la bague de fixation 2.

En alternative, on pourrait disposer la cale de serrage 3 sur le tube 1 avant insertion de l'extrémité du tube 1 à l'intérieur de l'évidement horizontal 42 du raccord 4.

Ensuite, la bague de fixation 2 est rapprochée du raccord 4 puis les filetages internes 20 de la bague de fixation 2 sont vissés sur les filetages externes 40 du raccord 4. Le vissage est de préférence réalisé par rotation de la bague de fixation 2 dans un sens de rotation prédéterminé, par exemple un sens horaire.

Ainsi, la bague de fixation 2 est fixée sur le raccord 4. Dans le même temps, la butée d'appui 280 de la bague 2 vient enfoncer la cale de serrage 3 à l'intérieur du raccord 4. La cale de serrage 3 est alors de préférence enfoncée de manière homogène à l'intérieur du raccord 4, par appui contre la surface interne tronconique 44 du raccord.

On notera que de manière optionnelle, la bague de fixation 2 pourrait ensuite être dévissée et ôtée du raccord 4 sans que le tube 1 ne soit retiré du raccord 4, le tube 1 pouvant rester en place dans le raccord 4 par l'intermédiaire de la cale de serrage 3 qui reste en position.

Le désassemblage ultérieur du tube 1 par rapport au raccord 4 peut être réalisé selon les étapes suivantes.

La bague de fixation 2 est, dans un premier temps, éloignée du raccord 4, par dévissage des filetages internes 20 de la bague par rapport aux filetages 40 du raccord. Le dévissage est de préférence réalisé par rotation de la bague de fixation 2 dans le sens de rotation inverse, par exemple un sens antihoraire.

Le dévissage de la bague de fixation 2 permet l'accès à la cale de serrage 3. La cale 3 présente de préférence des moyens de démontage, ici des rainures annulaires 39 de démontage, permettent l'insertion d'un outil de démontage tel qu'un extracteur.

Enfin, une fois la cale 3 desserrée, l'extrémité du tube 1 peut être retirée du raccord 4 en extrayant le tube 1 de l'évidement horizontal 42.

Ainsi, la conception du tube 1 démontable, de la bague 2 de fixation, de la cale 3 de serrage et du raccord 4 (ou 4' ou 4") permettent le serrage coaxial du tube sur le raccord. Un avantage important de ce mode de fixation est d'être réversible. L'assemblage et le désassemblage réciproques d'un tube et d'un raccord peuvent être réitérés autant de fois que nécessaire.

On constitue ainsi un cadre modulaire de deux-roues. La forme et l'architecture du cadre peuvent être adaptées à différents modes d'utilisation (standard, « cargo », « fatbike », vélo à assistance électrique, etc.) ou évoluer en fonction des besoins de l'utilisateur.

De plus, une fois les éléments constitutifs du cadre disponibles (notamment les tubes, les bagues de fixation, les cales de serrage et les raccords tels que décrits ci-avant), l'assemblage d'un cadre de bicyclette complet est très rapide et peut être réalisé en un temps inférieur à vingt minutes, voire inférieur à dix ou cinq minutes, sans compétence technique particulière. En outre, cet assemblage ne nécessite pas de soudure ou de brasage et est ainsi à la portée d'un grand nombre d'utilisateurs. Le désassemblage du cadre est également facile.

## Revendications

1. Cadre adaptable de bicyclette comprenant un tube horizontal (1) démontable, un tube de selle (1') démontable et un tube diagonal (1") démontable formant un triangle avant, le tube horizontal (1) et le tube de selle (1') étant assemblés ensemble de façon amovible sur un raccord de selle (4), le tube horizontal (1) et le tube diagonal (1") étant assemblés ensemble de façon amovible sur un raccord de direction (4'), le tube de selle (1') et le tube diagonal (1") étant assemblés ensemble de façon amovible sur un raccord de base (4"), un tube (1, 1', 1") des trois tubes dèmontables s'étendant longitudinalement le long d'un axe (A) et comprenant une paroi externe (12), ce tube (1, 1', 1") comprenant encore au moins une bague de fixation (2) qui comprend une surface radiale interne de bague (24) s'étendant en anneau autour de la paroi externe (12) selon l'axe (A) et définissant un espace radial (22) ouvert vers l'extérieur entre la paroi externe (12) et la surface radiale interne de bague (24), ladite bague de fixation (2) comprenant une extrémité de raccordement (26) prévue pour être orientée vers le raccord respectif (4, 4', 4"), cette bague de fixation (2) comprenant en outre une base de bague (28) située axialement à l'opposé de ladite extrémité de raccordement (26), ledit espace radial (22) étant prévu pour recevoir le raccord respectif (4, 4', 4") comprenant des moyens de fixation externes (40) configurés pour s'insérer dans l'espace radial (22) ménagé par la bague de fixation (2), lesdits moyens de fixation (40) du raccord (4, 4', 4") étant complémentaires avec des moyens de fixation internes (20) que comporte la bague de fixation (2) au niveau de la surface radiale interne (24), ces moyens de fixation internes (20) étant, d'une part, positionnés du côté de l'extrémité de raccordement (26) de ladite bague de fixation (2) et, d'autre part, configurés pour se fixer de manière amovible sur des moyens de fixation externes (40) du raccord (4, 4', 4"), **caractérisé en ce que** le tube (1, 1', 1") comprend en outre une cale de serrage (3), la base de bague (28) comprenant une butée d'appui (280) permettant d'appuyer sur ladite cale de serrage (3) et d'intercaler ladite cale de serrage (3), d'une part, entre le tube (1, 1', 1") et la bague de fixation (2) et d'autre part dans un évidement central (42) du raccord (4, 4', 4") et ladite paroi externe (12) du tube (1, 1', 1") .

2. Cadre adaptable de bicyclette selon la revendication 1, dans lequel les moyens de fixation internes de la bague de fixation (2) comprennent des filetages internes (20) complémentaires avec des filetages externes (40) du raccord (4, 4', 4").

3. Cadre adaptable de bicyclette selon l'une des revendications précédentes, dans lequel la base de bague (28) comprend en outre au moins une gorge de démontage (29) configurée pour permettre un démontage de la cale de serrage (3), de préférence à l'aide d'un extracteur.

4. Cadre adaptable de bicyclette selon l'une quelconque des revendications 1 à 3, dans lequel la bague de fixation (2) est mobile en translation par rapport au tube (1) le long de l'axe (A).

5. Cadre adaptable selon l'une quelconque des revendications précédentes, dans lequel les moyens de fixation externes du raccord (4, 4', 4") comprennent des filetages externes (40).

6. Cadre adaptable selon l'une quelconque des revendications précédentes, dans lequel l'évidement central (42) du raccord (4, 4', 4") comprend une surface interne tronconique (44), configurée pour permettre d'intercaler la cale de serrage (3) contre ladite surface interne tronconique (44) entre le tube (1, 1', 1") et le raccord (4, 4', 4").

7. Cadre adaptable selon l'une quelconque des revendications précédentes, dans lequel quand la bague de fixation (2) est désassemblée par rapport au tube (1, 1', 1"), le tube (1, 1' 1") est dépourvu de bague de fixation.

8. Cadre adaptable selon l'une quelconque des revendications précédentes, ledit cadre comprenant deux bases (60-1, 60-2), le raccord de base (4") étant prévu pour assembler de façon amovible les bases (60-1, 60-2) avec le tube de selle (1') et/ le tube diagonal (1").

9. Cadre adaptable selon la revendication 8, dans lequel au moins une base (60-1), parmi les deux dites bases, comprend un flanc latéral qui comporte :
- au moins une vis de fixation (62) sur l'autre base (60-2) située en regard, de préférence trois vis de fixation sur ladite autre base ;
- une vis supplémentaire de fixation (64) sur le raccord de base (4").

10. Cadre adaptable selon l'une quelconque des revendications précédentes, le raccord de selle (4) présentant une forme générale coudée ou en T, dans ce raccord de selle (4) étant formé un premier évidement vertical pour le passage traversant du tube de selle (1').

11. Cadre adaptable selon la revendication 10, le tube de selle (1') comprenant une extrémité haute présentant une pièce de vissage (50) s'insérant dans une partie basse du raccord de selle (4), la pièce de vissage (50) présentant un orifice pour le passage d'une vis de fixation (52).

12. Bicyclette comportant un cadre adaptable (10) selon l'une quelconque des revendications précédentes.

## Patentansprüche

1. Anpassbarer Fahrradrahmen, umfassend ein demontierbares horizontales Rohr (1), ein demontierbares Sattelrohr (1') und ein demontierbares diagonales Rohr (1"), die ein vorderes Dreieck bilden, wobei das horizontale Rohr (1) und das Sattelrohr (1') abnehmbar auf einem Sattelanschluss (4) miteinander verbunden sind, wobei das horizontale Rohr (1) und das diagonale Rohr (1") abnehmbar auf einem Lenkanschluss (4') miteinander verbunden sind, wobei das Sattelrohr (1') und das diagonale Rohr (1") abnehmbar auf einem Basisanschluss (4") miteinander verbunden sind, wobei ein Rohr (1, 1', 1") der drei demontierbaren Rohre sich in Längsrichtung entlang einer Achse (A) erstreckt und eine Außenwand (12) umfasst, wobei dieses Rohr (1, 1', 1") außerdem mindestens einen Befestigungsring (2) umfasst, der eine radiale Innenfläche des Rings (24) umfasst, die sich ringförmig um die Außenwand (12) entlang der Achse (A) erstreckt und einen nach außen offenen radialen Raum (22) zwischen der Außenwand (12) und der radialen Innenfläche des Rings (24) definiert, wobei der Befestigungsring (2) ein Anschlussende (26) umfasst, das vorgesehen ist, um zum jeweiligen Anschluss (4, 4', 4") ausgerichtet zu sein, wobei der Befestigungsring (2) ferner eine Ringbasis (28) umfasst, die axial gegenüber dem Anschlussende (26) angeordnet ist, wobei der radiale Raum (22) vorgesehen ist, um den jeweiligen Anschluss (4, 4', 4") aufzunehmen, der externe Befestigungsmittel (40) umfasst, die konfiguriert sind, um in den durch den Befestigungsring (2) gebildeten radialen Raum (22) eingeführt zu werden, wobei die Befestigungsmittel (40) des Anschlusses (4, 4', 4") zu den inneren Befestigungsmitteln (20) komplementär sind, die der Befestigungsring (2) im Bereich der radialen Innenfläche (24) aufweist, wobei diese inneren Befestigungsmittel (20) einerseits auf der Seite des Anschlussendes (26) des genannten Befestigungsrings (2) positioniert sind und andererseits konfiguriert sind, um abnehmbar an den äußeren Befestigungsmitteln (40) des Anschlusses (4, 4', 4") fixiert zu werden, **dadurch gekennzeichnet, dass** das Rohr (1, 1', 1") ferner einen Spannkeil (3) umfasst, wobei die Ringbasis (28) einen Stützanschlag (280) umfasst, der es ermöglicht, auf den Spannkeil (3) zu drücken und den Spannkeil (3) einerseits zwischen dem Rohr (1, 1', 1") und dem Befestigungsring (2) und andererseits in eine zentrale Aussparung (42) des Anschlusses (4, 4', 4") und die Außenwand (12) des Rohrs (1, 1', 1") einzufügen.

2. Anpassbarer Fahrradrahmen nach Anspruch 1, wobei die inneren Befestigungsmittel des Befestigungsrings (2) Innengewinde (20) umfassen, die zu den Außengewinden (40) des Anschlusses (4, 4', 4") komplementär sind.

3. Anpassbarer Fahrradrahmen nach einem der vorstehenden Ansprüche, wobei die Ringbasis (28) ferner mindestens eine Demontagekerbe (29) umfasst, die konfiguriert ist, um eine Demontage des Spannkeils (3) vorzugsweise mit Hilfe eines Abziehers zu ermöglichen.

4. Anpassbarer Fahrradrahmen nach einem der Ansprüche 1 bis 3, wobei der Befestigungsring (2) in Bezug auf das Rohr (1) entlang der Achse (A) translatorisch bewegbar ist.

5. Anpassbarer Rahmen nach einem der vorstehenden Ansprüche, wobei die externen Befestigungsmittel des Anschlusses (4, 4', 4") Außengewinde (40) umfassen.

6. Anpassbarer Rahmen nach einem der vorstehenden Ansprüche, wobei die zentrale Aussparung (42) des Anschlusses (4, 4', 4") eine kegelstumpfförmige Innenfläche (44) aufweist, die konfiguriert ist, um es zu ermöglichen, den Spannkeil (3) zwischen dem Rohr (1, 1', 1") und dem Anschluss (4, 4', 4") gegen die kegelstumpfförmige Innenfläche (44) einzufügen.

7. Anpassbarer Rahmen nach einem der vorstehenden Ansprüche, wobei das Rohr (1, 1', 1") ohne Befestigungsring ist, wenn der Befestigungsring (2) in Bezug auf das Rohr (1, 1', 1") abgebaut wird.

8. Anpassbarer Rahmen nach einem der vorstehenden Ansprüche, wobei der Rahmen zwei Basen (60-1, 60-2) umfasst, wobei der Basisanschluss (4") vorgesehen ist, um die Basen (60-1, 60-2) abnehmbar mit dem Sattelrohr (1') und/oder dem diagonalen Rohr (1") zusammenzubauen.

9. Anpassbarer Rahmen nach Anspruch 8, wobei mindestens eine Basis (60-1) aus den beiden Basen eine seitliche Flanke umfasst, die aufweist:
- mindestens eine Befestigungsschraube (62) auf der gegenüberliegenden anderen Basis (60-2), vorzugsweise drei Befestigungsschrauben auf der anderen Basis;
- eine zusätzliche Befestigungsschraube (64) auf dem Basisanschluss (4").

10. Anpassbarer Rahmen nach einem der vorstehenden Ansprüche, wobei der Sattelanschluss (4) eine allgemein abgewinkelte oder T-förmige Form aufweist, wobei in diesem Sattelanschluss (4) eine erste vertikale Aussparung für den Durchgang durch das Sattelrohr (1') ausgebildet ist.

11. Anpassbarer Rahmen nach Anspruch 10, wobei das Sattelrohr (1') ein oberes Ende aufweist, das ein Verschraubungsstück (50) aufweist, das in einen unteren Teil des Sattelanschlusses (4) eingesetzt wird, wobei das Verschraubungsstück (50) eine Öffnung für den Durchgang einer Befestigungsschraube (52) aufweist.

12. Fahrrad mit einem anpassbaren Rahmen (10) nach einem der vorstehenden Ansprüche.

## Claims

1. Adaptable bicycle frame comprising a removable horizontal tube (1), a removable seat tube (1') and a removable diagonal tube (1") forming a front triangle, the horizontal tube (1) and the seat tube (1') being detachably joined together on a seat connector (4), the horizontal tube (1) and the diagonal tube (1") being detachably joined together on a direction connector (4'), the seat tube (1') and the diagonal tube (1") being detachably joined together on a base connector (4"), one tube (1, 1', 1") of the three removable tubes extending longitudinally along an axis (A) and comprising an outer wall (12), this tube (1, 1', 1") further comprising at least one fastening ring (2) which comprises a ring radial inner surface (24) extending annularly around the outer wall (12) along the axis (A) and defining a radial space (22) which is open to the outside between the outer wall (12) and the ring radial inner surface (24), said fastening ring (2) comprising a connection end (26) intended to be oriented toward the relevant connector (4, 4', 4"), said fastening ring (2) further comprising a ring base (28) located axially opposite said connection end (26), said radial space (22) being intended to receive the relevant connector (4, 4', 4") comprising outer fastening means (40) which are configured to fit into the radial space (22) provided by the fastening ring (2), said fastening means (40) of the connector (4, 4', 4") being complementary to inner fastening means (20) that the fastening ring (2) comprises on the inner radial surface (24), these inner fastening means (20) being positioned on the connection end (26) of said fastening ring (2) and being configured to be removably fastened to outer fastening means (40) of the connector (4, 4', 4"),
**characterized in that** the tube (1, 1', 1") further comprises a clamping wedge (3), the ring base (28) comprising a bearing stop (280) for bearing on said clamping wedge (3) and for inserting said clamping wedge (3) between the tube (1, 1', 1") and the fastening ring (2) and in a central recess (42) of the connector (4, 4', 4") and said outer wall (12) of the tube (1, 1', 1").

2. Adaptable bicycle frame according to claim 1, wherein the inner fastening means of the fastening ring (2) comprise inner threads (20) complementary to outer threads (40) of the connector (4, 4', 4").

3. Adaptable bicycle frame according to either of the preceding claims, wherein the ring base (28) further comprises at least one removal groove (29) which is configured to allow the clamping wedge (3) to be removed, preferably by means of an extractor.

4. Adaptable bicycle frame according to any one of claims 1 to 3, wherein the fastening ring (2) is translatable relative to the tube (1) along the axis (A).

5. Adaptable frame according to any one of the preceding claims, wherein the outer fastening means of the connector (4, 4', 4") comprise outer threads (40).

6. Adaptable frame according to any one of the preceding claims, wherein the central recess (42) of the connector (4, 4', 4") comprises a frustoconical inner surface (44) which is configured to allow the clamping wedge (3) to be inserted between the tube (1, 1', 1") and the connector (4, 4', 4") against said frustoconical inner surface (44).

7. Adaptable frame according to any one of the preceding claims, wherein when the fastening ring (2) is disassembled from the tube (1, 1', 1"), the tube (1, 1', 1") is free of the fastening ring.

8. Adaptable frame according to any one of the preceding claims, said frame comprising two bases (60-1, 60-2), the base connector (4") being provided for detachably joining the bases (60-1, 60-2) to the seat tube (1') and/or the diagonal tube (1").

9. Adaptable frame according to claim 8, wherein at least one base (60-1) among the two bases comprises a side flank which comprises:
- at least one fastening screw (62) on the other opposite base (60-2), preferably three fastening screws on said other base;
- an additional fastening screw (64) on the base connector (4").

10. Adaptable frame according to any one of the preceding claims, the seat connector (4) having a generally angled shape or being T-shaped, a first vertical recess being formed in this seat connector (4) for the seat tube (1') to pass through.

11. Adaptable frame according to claim 10, the seat tube (1') comprising a top end having a screw part (50) which fits into a bottom portion of the seat connector (4), the screw part (50) having a hole for a fastening screw (52) to pass through.

12. Bicycle comprising an adaptable frame (10) according to any one of the preceding claims.
